# NEUE EUROPÄISCHE PATENTSCHRIFT

(11) **EP 1 876 087 B2**
(45) Veröffentlichungstag und Bekanntmachung des Hinweises auf die Entscheidung über den Einspruch: **19.11.2014**
(45) Hinweis auf die Patenterteilung: 08.09.2010
(21) Anmeldenummer: 06014016.7
(22) Anmeldetag: 06.07.2006
(51) Int. Cl.: B62D 29/04, B32B 5/18

(54) **Verfahren zum Herstellen eines geschäumten Fahrzeugteils**
Method of manufacturing a foamed vehicle component
Procédé de fabrication d'un composant de véhicule en mousse synthétique

(43) Veröffentlichungstag der Anmeldung: 09.01.2008
(73) Patentinhaber: Roof Systems Germany GmbH, 63128 Dietzenbach (DE)
(72) Erfinder: Ludwig, Matthias, 38159 Vechelde (DE); Niesner, Tobias, 38518 Gifhorn (DE)
(74) Vertreter: Prinz & Partner mbB

(56) Entgegenhaltungen:
- EP-A1- 1 338 496
- EP-A2- 0 455 026
- WO-A-01/92087
- DE-A1- 4 116 437
- DE-A1- 10 124 807
- DE-A1- 10 342 205
- DE-A1- 19 921 646
- DE-A1- 19 951 785
- DE-T2- 60 203 588
- FR-A1- 2 636 266
- GB-A- 2 371 014
- US-A- 5 536 539
- US-B1- 6 551 432
- Daimler Crysler Hightec Report 1/2005, S. 10-15 (Am Anfang ist der Lack)
- D. MIES ET AL.: 'Komplexe Automobil-Dachmodule durch Polyurethan-Folienhinterschäumung' MOBILES Nr. 31, September 2005,

## Beschreibung

Die Erfindung betrifft ein Verfahren zum Herstellen eines geschäumten Fahrzeugteils.

Geschäumte Fahrzeugteile sind z.B. Karosserieanbauteile wie Klappen (Türen, Deckel), Stoßfänger oder Dachmodule, die an einer Fahrzeugkarosserie angebracht werden, die die Außenhaut des Fahrzeugs im fertig montierten Zustand wenigstens abschnittsweise definieren und von außen sichtbar sind. Darüber hinaus gibt es geschäumte Fahrzeugteile mit einem glasfaserverstärkten PU-Material, wobei die Glasfasern beispielsweise im sogenannten LFI (Long Fiber Injection)-Verfahren in den Kunststoff eingeschossen werden. Eine tiefgezogene, durchgefärbte Folie, die aus Kunststoff oder Aluminium besteht, wird dabei in ein Schäumwerkzeug eingelegt und hinterschäumt. Die durchgefärbte Folie ersetzt eine außenseitige Lackierung.

Wichtig bei der Herstellung eines geschäumten Fahrzeugteils ist es, dass sich die Farbe des Fahrzeugteils nicht von der Farbe der angrenzenden, lackierten Karosserie unterscheidet, so dass sich eine durchgehende Farbfläche ergibt. Beim Umformen der aus dem Stand der Technik bekannten, durchgefärbten Folie können jedoch an Ecken und Kanten, insbesondere bei Metallicfarben, Schattierungen auftreten, die die gleichmässige Farbfläche unterbrechen.

Die Aufgabe der Erfindung besteht darin, ein Verfahren zur Herstellung eines geschäumten Fahrzeugteils bereitzustellen, mit dem das geschäumte, ebenfalls eine gleichmässige Außenfarbe aufweisende Fahrzeugteil kostengünstig und einfach hergestellt werden kann.

Dies wird durch ein erfindungsgemäßes Verfahren zum Herstellen eines geschäumten Fahrzeugteils erreicht, das folgende Schritte aufweist:
Umformen einer als Außenhaut dienenden, transparenten Folie, wobei die Folie eine Vorderseite und eine Rückseite aufweist, anschließend
Nassauftrag einer Farbe auf der Rückseite der Folie zur Bildung einer farbgebenden Schicht, und anschließend
rückseitiges Hinterschäumen der Folie.

Die Außenhaut ist eine farblose, transparente Folie, die umgeformt wird. Anschließend wird eine Farbe auf der Rückseite der Folie nass aufgetragen, d.h. bei der farbgebenden Schicht handelt es sich nicht um eine Folie, die aufgeklebt wird, oder dergleichen, sondern die Farbe muss nach dem Aufbringen erst trocknen. Die aufgetragene Farbe bildet eine farbgebende Schicht für die Außenseite des Fahrzeugteils, das nicht mehr außenseitig lackiert wird. Die Folie wird anschließend rückseitig, also auf der im eingebauten Zustand von außen nicht sichtbaren Seite, hinterschäumt. Die als Außenhaut dienende Folie ist im Gegensatz zum Stand der Technik nicht selbst durchgefärbt, sondern eine separate farbgebende Schicht ist vorgesehen, die durch die farblose, transparente Folie scheint und dem geschäumten Fahrzeugteil seine Farbe gibt. Schattierungen, die im Stand der Technik beim Umformen der durchgefärbten Folie an Ecken und Kanten auftreten konnten, werden verhindert. Vorteilhaft ist weiterhin, dass das geschäumte Fahrzeugteil durch das Verfahren z.B. eine Metalliclackfarbe aufweisen kann, die sich von der Farbe der restlichen Karosserie nicht unterscheidet. Bei im Stand der Technik durchgefärbten Folien konnten sich beim Umformen der Folie Metallicteilchen, die den Metalliceffekt bewirken, ausrichten, wodurch der Metalliceffekt von dem der restlichen Karosserie abweichte.

Vorzugsweise wird die farbgebende Schicht durch Lackieren hergestellt. Sowohl für das geschäumte Fahrzeugteil als auch für die restliche Karosserie kann dieselbe Lackfarbe verwendet werden. Die Farbe des geschäumten Fahrzeugteils entspricht dann exakt der Farbe der lackierten Karosserie.

Die farbgebende Schicht ist bevorzugt flexibel. Die Folie und die Schäumschicht haben unterschiedliche Wärmeausdehnungskoeffizienten. Die farbgebende Schicht gleicht die vorhandenen unterschiedlichen Wärmeausdehnungen der Folie und der Schäumschicht aus. Ein Toleranzausgleich ist somit sowohl während des Hinterschäumens als auch im montierten Zustand gewährleistet.

Weitere Merkmale und Vorteile ergeben sich aus der nachfolgenden Beschreibung und den Zeichnungen. Die Erfindung wird anhand einer Ausführungsform beschrieben. In den Zeichnungen zeigen:
Figur 1 eine perspektivische Ansicht eines Fahrzeugs mit einem erfindungsgemäßen geschäumten Fahrzeugteil in Form eines Dachmoduls, und
Figur 2 der grundsätzliche Aufbau eines erfindungsgemässen geschäumten Fahrzeugteils.

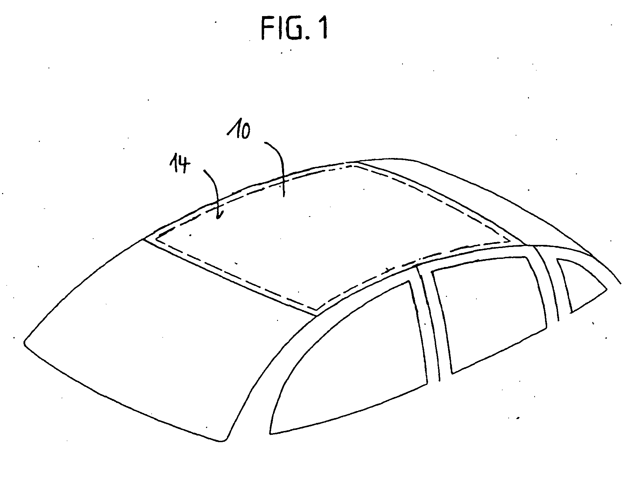

In Figur 1 ist ein geschäumtes Fahrzeugteil 10 in Form eines Dachmoduls in einem an einem Fahrzeug montierten Zustand gezeigt. Das geschäumte Fahrzeugteil 10 könnte auch ein Kotflügel, Tür, Klappe (Motorhaube, Kofferraumdeckel), ein Spoiler oder Frontteil eines Fahrzeugs sein.

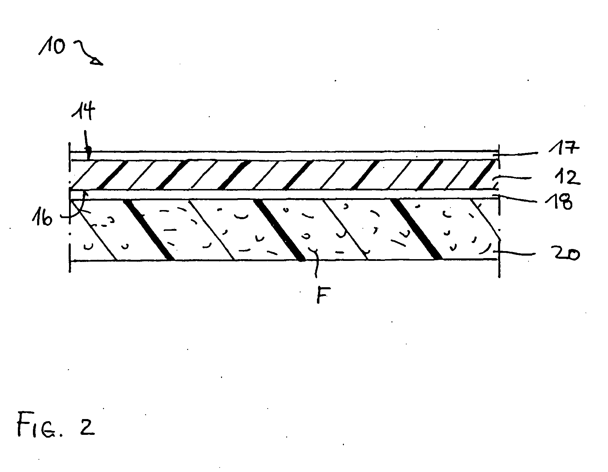

Der grundsätzliche Aufbau des geschäumten Fahrzeugteils 10 ist in Figur 2 gezeigt.

Das geschäumte Fahrzeugteil 10 hat eine im montierten Zustand am Fahrzeug von außen sichtbare Außenhaut, die durch eine dünne (0,5-1,5 mm), transparente, umgeformte Folie 12 gebildet ist. Die Folie 12 besteht aus Kunststoff und hat eine Vorderseite 14, die im eingebauten Zustand von außen sichtbar ist, und eine Rückseite 16.

Die Folie 12 kann vorderseitig mit einer Kratzfestbeschichtung 17 versehen sein. Die transparente Kraftfestbeschichtung 17 ist dünn (0,2 mm) und schützt die Folie 12.

Die Folie 12 ist rückseitig hinterschäumt. Eine dabei entstehende Schäumschicht 20 besteht aus einem glasfaserverstärkten PU-Schaum. Die Glasfasern F sind durch das LFI (Long Fiber Injection)-Verfahren in den Schaum eingebracht und verstärken dabei die Schäumschicht 20.

Zwischen der Folie 12 und der Schäumschicht 20 ist eine farbgebende Schicht 18 vorgesehen, die z.B. als Lackschicht ausgebildet ist. Die farbgebende Schicht 18 ist flexibel, so dass Spannungen aufgrund von unterschiedlichen Wärmeausdehnungskoeffizienten der Folie 12 und der Schäumschicht 20 durch die farbgebende Schicht 18 ausgeglichen werden können. Ferner übernimmt die farbgebende Schicht 18 die Aufgabe der Außenlackierung, da die farbgebende Schicht 18 durch die farblose und transparente Folie 12 scheint und von außen sichtbar ist.

Beidem Verfahren zum Herstellen des geschäumten Fahrzeugteils 10 wird die Folie 12 gegebenenfalls mit der Kratzbeschichtung 17 versehen und anschließend umgeformt, in dem sie tiefgezogen bzw. thermoplastisch umgeformt wird.

Anschließend wird auf der Rückseite 16 der Folie 12 eine Farbe nass aufgetragen, wobei der Nassauftrag durch Aufrakeln, Walzen oder im Sprühlackverfahren erfolgen kann. Nach dem Trocknen der nassaufgetragenen Folie ist die farbgebende Schicht 18 gebildet, die eine Lackschicht ist.

Anschließend wird die Folie 12 in ein Schäumwerkzeug (nicht gezeigt) eingelegt, das aus einem Oberteil und einem Unterteil besteht. Bei geöffnetem Schäumwerkzeug wird flüssiges PU-Material rückseitig auf die Folie 12 und die farbgebende Schicht 18 aufgebracht, wobei Glasfasern F eingeschossen werden (LFI-Verfahren).

Das zweiteilige Schäumwerkzeug wird zusammengefahren und das PU-Material schäumt aus, füllt den sich zwischen dem Unter- und dem Oberteil bildenden Hohlraum aus und bildet nach dem Schäumen die Schäumschicht 20. Nach dem Auseinanderfahren des Unter- und des Oberteils und dem Entnehmen des geschäumten Fahrzeugteils 10 scheint die farbgebende Schicht 18 durch die transparente, farblose Folie 12, wodurch eine Außenlackierung des geschäumten Fahrzeugteils 10 entfällt. Als farbgebende Schicht 18 kann dieselbe Lackfarbe verwendet werden, die auch für die angrenzende Karosserie verwendet wird, so dass keine Farbunterschiede auftreten.

## Patentansprüche

1. Verfahren zum Herstellen eines geschäumten Fahrzeugteils, **gekennzeichnet durch** folgende Schritte:
- Umformen einer als Außenhaut dienenden, transparenten Folie (12), wobei die Folie (12) eine Vorderseite (14) und eine Rückseite (16) aufweist, anschließend
- Nassauftrag einer Farbe auf der Rückseite (16) der Folie (12) zur Bildung einer farbgebenden Schicht (18), und anschließend
- rückseitiges Hinterschäumen der Folie (12).

2. Verfahren nach Anspruch 1, **dadurch gekennzeichnet, dass** die Farbe, die die farbgebende Schicht (18) bildet, vor dem Hinterschäumen getrocknet ist.

3. Verfahren nach Anspruch 1 oder 2, **dadurch gekennzeichnet, dass** die farbgebende Schicht (18) durch Lackieren hergestellt wird.

4. Verfahren nach einem der vorhergehenden Ansprüchen, **dadurch gekennzeichnet, dass** die farbgebende Schicht (18) durch Aufrakeln, Walzen oder durch das Sprühlackverfahren hergestellt wird.

5. Verfahren nach einem der vorhergehenden Ansprüche, **dadurch gekennzeichnet, dass** die farbgebende Schicht (18) flexibel ist.

6. Verfahren nach einem der vorhergehenden Ansprüche, **dadurch gekennzeichnet, dass** die Folie (12) tiefgezogen wird.

7. Verfahren nach einem der vorhergehenden Ansprüche, **dadurch gekennzeichnet, dass** die Folie (12) thermoplastisch umgeformt wird.

8. Verfahren nach einem der vorhergehenden Ansprüche, **dadurch gekennzeichnet, dass** die Folie (12) mit einer Kratzfestbeschichtung (17) versehen wird.

## Claims

1. Method of manufacturing a foamed vehicle component, **characterized by** the following steps:
- reshaping a transparent sheet (12), serving as an outer skin, the transparent sheet (12) having a front side (14) and a rear side (16), subsequently
- applying a wet paint onto the rear side (16) of the sheet (12) to form a colouring layer (18), and subsequently
- providing the sheet (12) with a foam-backing on the rear side.

2. Method according to Claim 1, **characterized in that** the paint which forms the colouring layer (18) is dried before the foam-backing.

3. Method according to Claim 1 or 2, **characterized in that** the colouring layer (18) is produced by painting.

4. Method according to one of the preceding claims, **characterized in that** the colouring layer (18) is produced by knife coating, rolling or the paint-spraying process.

5. Method according to one of the preceding claims, **characterized in that** the colouring layer (18) is flexible.

6. Method according to one of the preceding claims, **characterized in that** the sheet (12) is thermoformed.

7. Method according to one of the preceding claims, **characterized in that** the sheet (12) is reshaped thermoplastically.

8. Method according to one of the preceding claims, **characterized in that** the sheet (12) is provided with a scratch-resistant coating (17).

## Revendications

1. Procédé de fabrication d'une partie de véhicule moussée, **caractérisé par** les étapes suivantes :
- le façonnage d'une feuille transparente (12) servant de revêtement extérieur, la feuille (12) présentant un recto (14) et un verso (16), ensuite
- l'application par voie humide d'un colorant sur le verso (16) de la feuille (12) pour former une couche colorante (18) et ensuite
- le moussage arrière du verso de la feuille (12).

2. Procédé selon la revendication 1, **caractérisé en ce que** le colorant qui forme la couche colorante (18) est séché avant le moussage arrière.

3. Procédé selon la revendication 1 ou 2, **caractérisé en ce que** la couche colorante (18) est fabriquée par laquage.

4. Procédé selon l'une quelconque des revendications précédentes, **caractérisé en ce que** la couche colorante (18) est fabriquée par raclage, laminage ou par le procédé de laquage par pulvérisation.

5. Procédé selon l'une quelconque des revendications précédentes, **caractérisé en ce que** la couche colorante (18) est flexible.

6. Procédé selon l'une quelconque des revendications précédentes, **caractérisé en ce que** la feuille (12) est emboutie.

7. Procédé selon l'une quelconque des revendications précédentes, **caractérisé en ce que** la feuille (12) est façonnée thermoplastiquement.

8. Procédé selon l'une quelconque des revendications précédentes, **caractérisé en ce que** la feuille (12) est munie d'un revêtement résistant aux éraflures (17).
